# FASCICULE DE BREVET EUROPEEN

(11) **EP 0 472 446 B1**
(45) Date de publication et mention de la délivrance du brevet: **02.11.1995**
(21) Numéro de dépôt: 91402049.0
(22) Date de dépôt: 23.07.1991
(51) Int. Cl.: C08G 8/04

(54) **Résines novolaques à base de para-alkylphenols. Leur procédé de préparation**
Novolakharze auf der Basis von para-Alkylphenolen. Verfahren zu deren Herstellung
Para-alkylphenol based novolak resins. Method for preparation therof

(30) Priorité: 25.07.1990 FR 9009485
(43) Date de publication de la demande: 26.02.1992
(73) Titulaire: CECA S.A., 92800 Puteaux (FR)
(72) Inventeur: Dreyfus, Thierry, F-60140 Villiers sur Coudun (FR); Le Bourt, Noel, F-60200 Compiegne (FR)
(74) Mandataire: Haicour, Philippe

(56) Documents cités:
- EP-A- 0 019 151
- EP-A- 0 050 230
- WO-A-90/08790
- BE-A- 677 585
- GB-A- 790 644
- US-A- 2 629 706
- US-A- 3 674 723
- A. KNOP: "PHENOLIC RESINS" pages 10,11,21-23, 1985, Springer Verlag, Berlin, DE
- idem

## Description

La présente invention concerne des résines novolaques phénoliques obtenues par condensation de phénols substitués uniquement en position para avec des aldéhydes aliphatiques lourds dont le nombre de carbone supérieur ou égal à 6, et leur procédé de synthèse.

Les résines phénoliques sont connues depuis plus de 75 ans. Baekeland en 1907 a développé des méthodes de synthèse pour obtenir des compositions de produits moulables. Les résines phénoliques ont été classées en deux groupes: les résols (one-step) thermoréactifs obtenus avec un rapport aldéhyde/phénol supérieur à 1 et dans des conditions de catalyse basique; les novolaques (two-step), produits thermoplastiques obtenus avec un rapport aldéhyde/phénol inférieur à 1 et dans des conditions de catalyse acide (voir par exemple, Phenolics Resins de A. KNOP et L. PILATO, chez Springer-Verlag, 1985 p. 25). En temps qu'aldéhyde, c'est le formaldéhyde (ou l'un de ses précurseurs, paraformaldéhyde, trioxane ou hexaméthylènetétramine) qui est, de loin, le plus utilisé. Les aldéhydes aliphatiques ont été peu utilisés pour la synthèse des novolaques. On trouve quelques brevets décrivant l'utilisation d'aldéhydes aliphatiques courts, notamment l'isobutyraldéhyde. La plupart du temps, il s'agit de résines obtenues à partir de mélanges réactifs dans lesquels le rapport molaire entre l'aldéhyde et le phénol est tout au plus égal à 1, encore qu'il ne s'agisse en l'occurrence que du rapport molaire entre les réactifs, la résine, lorsqu'elle analysée quant à ce rapport, n'est caractérisée que par un rapport structural aldéhyde/phénol tout à fait classique, c'est à dire inférieur ou tout au plus égal à 1. C'est en particulier ce qu'enseignent le brevet allemand DE 29 18593 (1979), relatif à une application de ces résines phénol/isobutyraldéhyde, en indiquant qu'on prépare ces résines novolaques à partir de milieux dont les rapports molaires isobutyraldéhyde/phénol sont compris entre 1,2/1 et 1,3/1, ou le brevet britannique n°790644 relatif à des résines phénol/aldéhydes oxo, cependant que dans les résines après réaction, ce rapport molaire est inférieur à 1. Dans le même esprit, le brevet européen EP 0 050 230 (1981) décrit des résines novolaques phénol/isobutyraldéhyde qu'on améliore par élimination des composés à bas poids moléculaires par entraînement à la vapeur résultant en toute évidence de l'excès d'aldéhyde.

Précédemment, la demanderesse avait trouvé (voir sa demande PCT WO-A-90 08790) que les aldéhydes lourds, à nombre de carbone supérieur ou égal à 6, avaient un comportement différent des aldéhydes légers au cours de leur condensation avec les phénols, et que moyennant certaines conditions opératoires, il était possible d'obtenir des résines novolaques avec un rapport structural aldéhyde/phénol élevé.

Jusqu'à présent, les phénols substitués uniquement en position para n'avaient pas retenu une attention particulière à cet égard. A. KNOP et L. PILATO dans Phenolics Resins, ouvrage cité, parlent bien d'une condensation de paratertiobutylphénol et d'acétaldéhyde donnant un produit identique à la condensation de ce même alkylphénol avec de l'acétylène en présence de cyclohexylamine comme catalyseur, utilisable comme résine tackifiantes dans le caoutchouc cru; on trouve également dans le brevet US 3 674 723 la référence à des résines novolaques mixtes issues de la condensation de paratertiobutylphénol et d'acétaldéhyde et de formol; mais il y est toujours indiqué que la condensation acétaldéhyde/phénol se fait selon un rapport molaire égal à un.

La demanderesse a maintenant découvert qu'il était possible d'obtenir des résines novolaques à fort rapport molaire structural aldéhydes/phénol substitué, par condensation, en présence de catalyseurs acides, de phénols substitués en position para mais dont les positions ortho sont libres, à condition de conduire la synthèse en milieu pratiquement anhydre, mais surtout que lorsque le choix est fait d'aldéhydes lourds, c'est-à-dire à nombre de carbone égal ou supérieur à six, on pouvait atteindre des résines avec des rapports molaires structuraux au moins égaux à 1,3. Ces rapports structuraux au moins éégaux à 1,3, inconnus de l'art antérieur, sont revendiqués dans le présent brevet.

Les phénols utilisables dans l'invention sont les phénols ayant un hydrogène sur les carbones en ortho du carbone portant la fonction phénol, et portant en para un atome d'halogène, un hydroxyle, un carboxyle, ou un motif hydrocarboné substitué ou non. Les monophénols de l'invention sont caractérisés, d'après les théories actuellement acceptées, comme phénols possédant une fonctionnalité de deux. Aussi est-il très surprenant que l'on puisse utiliser l'hydroquinone qui est un diphénol 1-4 ou encore des diphénols reliés par la position para comme le bisphénol-A, ou le bisphénol-F, qui possèdent quatre positions ortho libres, et dont on attendrait qu'ils forment, pour des rapports molaires qui sont ceux de l'invention de l'invention, des réseaux tridimensionnels, et néanmoins obtenir des produits non réticulés.

Comme substituants en position para du carbone portant la fonction hydroxyle, on peut avoir un atome d'halogène, comme par exemple avec le parachlorophénol ou le parabromophénol, une chaîne carbonée alkyle avec un nombre de carbone compris entre 1 et 20, comme par exemple avec le paracrésol, le paratertiobutylphénol, le para-octylphénol, un groupe acide carboxylique comme dans l'acide parahydroxybenzoïque, l'hydroxyle comme dans l'hydroquinone, des groupement aryles ou arylaliphatique comme dans le bisphénol-A ou le bisphénol-F. Le substituant peut être attaché au cycle par un atome autre qu'un atome de carbone, par exemple un atome d'oxygène comme dans le paraméthoxyphénol. Les positions en méta peuvent être substituées ou non, à condition que la substitution ne soit pas un hydroxyle. Les para-alkylphénols sont les phénols préférés pour l'invention.

Les aldéhydes de l'invention sont les aldéhydes aliphatiques linéaires ou ramifiés. On peut aussi utiliser des mélanges d'isomères comme ceux que l'on obtient par synthèse "oxo" à partir d'oligomères de propylène, ou d'oléfines linéaires. Avec des aldéhydes aliphatiques ayant un nombre de carbones compris entre deux et cinq, on une réaction incomplète, c'est-à-dire qu'une partie de l'aldéhyde ne réagit pas, et que le rapport molaire final de la résine, bien que nettement supérieur à 1, est inférieur à celui du chargement. C'est pourquoi dans cette invention, on a préféré les aldéhydes ayant un nombre de carbones supérieurs à six, de préférence 7 à 10, avec lesquels il est aisé, dans les conditions de l'invention d'obtenir des rapports molaires structuraux au moins égaux à 1,3.

Pour atteindre de tels rapports structuraux, le rapport molaire de chargement aldéhyde aliphatique/phénol peut être compris entre 1,3 et 5, et préférentiellement entre 1,3 et 2,5. On observe que la répartition des masses moléculaires des résines aldéhydes lourds / phénols parasubstitués à sites ortho libres est toujours plus étroite que celle des résines à base de formaldéhyde. Pour des rapports molaires très élevés, par exemple supérieurs à 3, on constate qu'une partie de l'aldéhyde ne réagit pas, et que le rapport molaire final de la résine, bien que nettement supérieur à 1, est inférieur à celui du chargement.

### On obtient également des résultats intéressants en faisant la synthèse avec des mélanges d'aldéhydes lourds et de formaldéhyde.

La synthèse des résines novolaques selon l'invention exige d'être conduite dans un milieu anhydre ou pratiquement anhydre. On opère donc sans ajout d'eau, en coulant l'aldéhyde lourd dans le mélange des phénols et du catalyseur et en entraînant en continu par azéotropie l'eau formée au cours de la réaction de condensation; on recycle l'aldéhyde qui se sépare dans le florentin. On peut, si nécessaire, ajouter un solvant hydrophobe pour améliorer la distillation, par exemple un solvant aromatique comme le toluène. Les essais comparatifs de synthèse menées en présence d'eau montrent que même en partant avec un rapport molaire supérieur à un, la réaction n'est pas complète, qu'une grande partie de l'aldéhyde introduit ne réagit pas, et que le rapport molaire dans la résine finale est alors inférieur à un. Les catalyseurs utilisables dans l'invention sont de type acide fort, comme l'acide sulfurique concentré ou les acides sulfoniques. On les utilise à des taux inférieurs à 5% en poids par rapport au phénol, en général compris entre 0,1 et 1% en poids. Dans le cas de résines mixtes avec du formaldéhyde, on peut opérer de deux manières. Soit qu'on réalise une première condensation des phénols avec l'aldéhyde lourd et qu'après la fin de la distillation azéotropique, on opère une deuxième condensation avec le formaldéhyde dans les conditions bien connues de l'homme de l'art. Soit qu'on d'abord condense le formaldéhyde avec les phénols, puis qu'on condense l'aldéhyde lourd sur le mélange réactionnel. Il faut alors que dès le début de la coulée de l'aldéhyde lourd on ait un milieu de synthèse pratiquement anhydre ; ce qui peut être facilement réalisé, par exemple en concentrant le milieu réactionnel sous vide ou en opérant une distillation azéotropique. On préfère toutefois le premier mode opératoire décrit. Les autres conditions de synthèse sont très classiques. Après l'introduction de l'aldéhyde lourd, la distillation azéotropique est poursuivie jusqu'à la fin du dégagement d'eau. La résine peut ensuite être neutralisée, si nécessaire. La résine est ensuite concentrée sous vide jusqu'à obtention d'un point de fusion constant. Elle est ensuite refroidie et mise en forme d'écailles, de pastilles, de morceaux.

Le spectre infrarouge des résines de l'invention présente une particularité: il comporte un pic d'absorption important à 1680-1700 cm⁻¹, et un pic plus faible vers 1600-1620 cm⁻¹. En revanche, lorsqu'on opère en présence d'eau, on observa dans le spectre des résines obtenues une bande importante à 1600-1620 cm⁻¹ et une bande résiduelle à 1680-1700 cm⁻¹. Les résines para-alkylphénols/formol ne présentent qu'une bande à 1600 cm⁻¹. On n'a pas d'explication satisfaisante qui rende compte de ces caractéristiques, ni même des mécanismes mis en jeu pour aboutir aux résines selon l'invention. On peut toutefois avancer, mais sous toutes réserves, que les aldéhydes lourds pourraient réagir de deux manières avec les phénols, d'une manière classique, en formant des ponts méthylènes substitués et d'une manière non encore élucidée, lorsque le milieu de synthèse est pratiquement anhydre; que ces réactions seraient compétitives en milieu pratiquement anhydre, mais que la seconde pourrait être favorisée lorsque les positions ortho du phénol sont libres, lorsque la condensation est effectuée avec des aldéhydes lourds et lorsque la température de condensation est plus élevée.

Une autre caractéristique inattendue de ces nouvelles résines est la répartition étroite de leurs masses moléculaires. Lorsqu'on mesure la répartition des masses moléculaires d'une novolaque para-alkylphénol/formaldéhyde classique, on observe du coté des faibles masses moléculaires une série de pics correspondants aux oligomères de faible masse, c'est-à-dire de faible degré de condensation est faible (on trouve ainsi l'alkylphénol pour un degré n de condensation nul; pour n=1, le produit de condensation de 2 molécules de para-alkylphénol reliées par un pont méthylène, pour n=2 le produit de condensation de 3 molécules de para-alkylphénol reliées par deux ponts méthylène), la finesse de l'observation dépendant évidemment du pouvoir de séparation de la colonne chromatographique utilisée. Avec les novolaques alkylphénols/aldéhyde lourd de l'invention, dans les même conditions d'analyse, on n'observe qu'un pic principal, avec parfois un pic secondaire de plus faible masse moléculaire, une polydispersité bien plus faible que celle des novolaques alkylphénols/formaldéhyde classiques.

### EXEMPLES

L'invention est illustrée par les exemples suivants, non limitatifs dans lesquels, sauf indication contraire, les pourcentages sont exprimés en poids.

La mesure des masses moléculaires est exécutée par chromatographie de perméation de gel. On a opéré ici sur une colonne SHODEX H2002, munie d'une pompe Spectra, avec un débit de l'éluant (tétrahydrofuranne) de 3,5 ml/min, la résine étant introduite en solution dans le tétrahydrofuranne. La détection est effectuée sur un réfractomètre. La courbe de répartition des masses moléculaires est enregistrée sur un intégrateur SPECTRA. L'étalonnage des masses moléculaires est faite à partir d'étalons de type polyols. (A noter que ces indications permettent de reproduire sans difficulté des courbes de répartition moléculaire; les masses et les pourcentages des composés correspondants n'ont de valeur qu'indicative, car d'une part, en ce qui concerne les masses moléculaires, le coefficient de réponse de chaque composé qui peut varier d'une résine à l'autre et d'un oligomère à un autre, et d'autre part, les étalons polyols ont probablement des volumes hydrodynamiques différents de ceux des résines: l'étalonnage peut ainsi être affecté de déviations. Par exemple, le para-octylphénol de masse moléculaire 206 sort pour un étalonnage par polyols à 150-160. Il est cependant admis par les spécialistes que cette déviation est maximum pour les faibles masses et diminue lorsque les masses moléculaires augmentent; en conséquence, les valeurs indiquées par l'analyse pour le pic principal doivent être proches de la valeur réelle).

Dans ce qui suit, l'indication rapport molaire, sans autre précision, est mis pour rapport molaire aldéhyde(s)/phénol.

### Exemple 1

Dans un ballon tricol muni d'un séparateur Dean-Stark, d'une ampoule à brome et d'un agitateur, on introduit sous agitation 412 grammes de para-octylphénol (2 moles), 4,1 grammes d'acide paratoluènesulfonique et 50 grammes de toluène, on porte à 100°C et on coule en 45 minutes pour réaliser un rapport molaire de 1,38, 437 grammes (2,76 moles) d'isodécanal (Exxon, aldéhyde de synthèse oxo à partir de trimères de propylène; titre 98,5% en isomères d'aldéhyde en C₁₀) tout en éliminant l'eau formée par distillation azéotropique. On poursuit la distillation azéotropique pendant 1 heure, au cours de laquelle on recueille 41 grammes d'eau (2,3 moles, soit 84 % de la théorie par rapport à l'isodécanal). On concentre sous pression atmosphérique jusqu'à 200°C, on met sous vide et on maintient 30 minutes à 200°C à une pression d'environ 67 millibars (50 mm de mercure). On dépote 774 grammes de résine (soit un rendement de 96% par rapport aux matières premières engagées, compte tenu de la pureté de l'aldéhyde), dont le rapport molaire est d'environ 1,3. La résine se présente sous la forme d'un solide pâteux; sa teneur en para-octylphénol libre (par chromatographie gazeuse) est de 1%. L'indice d'hydroxyle est de 134 (théorie: 163). L'analyse chromatographique par perméation de gel donne les résultats suivants.

| N° de pic | Masse moléculaire | surface d'intégration (%) |
|---|---|---|
| 1 | 226 | 1,2 |
| 2 | 316 | 1,1 |
| 3 | 398 | 0,7 |
| 4 | 552 | 5,0 |
| 5 | 647 | 3,0 |
| 6 | 1200 | 89,0 |

| | |
|---|---|
| Masse moléculaire moyenne en nombre | 850 |
| Masse moléculaire moyenne en poids | 1113 |
| Indice de polydispersité | 1,31 |

### Contre-exemple 1

La chromatographie de perméation de gel d'une résine novolaque para-octylphénol/formol (R7510, résine CECA S.A., couramment utilisée comme résine tackifiante dans l'industrie du pneumatique), résine solide, d'un point-de fusion billeanneau compris entre 90 et 105°C. L'analyse par chromatographie de perméation de gel donne les résultats suivants.

| N° de pic | Masse moléculaire | surface d'intégration (%) |
|---|---|---|
| 1 | 170 | 4,8 |
| 2 | 340 | 12,6 |
| 3 | 500 | 15,3 |
| 4 | 700 | 12,2 |
| 5 | 960 | 55,1 |

On constate que la répartition des masses moléculaires est beaucoup plus large que pour les résines obtenues avec des aldéhydes lourds. Le pic principal ne représente que 55% de la surface totale d'intégration.

### Exemple 2

On reprend le procédé de synthèse de l'exemple 1. L'alkylphénol est le paracrésol et le rapport molaire isodécanal/paracrésol choisi est de 1,38. Pour 2,21 moles d'isodécanal introduites, on recueille 34 grammes d'eau, soit 1,9 moles. On obtient, avec un rendement de 98%, une résine molle, dont le rapport molaire est de 1,33. La courbe de répartition moléculaire est la suivante.

| N° de pic | Masse moléculaire | surface d'intégration (%) |
|---|---|---|
| 1 | 75 | 0,7 |
| 2 | 150 | 0,8 |
| 3 | 290 | 7,1 |
| 4 | 865 | 91,4 |

| | |
|---|---|
| Masse moléculaire moyenne en nombre | 725 |
| Masse moléculaire moyenne en poids | 915 |
| Indice de polydispersité | 1,26 |

### Contre-exemple 2

On remplace le paracrésol par l'orthocrésol dans le même procédé de synthèse que l'exemple 2, en conservant le même rapport molaire de départ de 1,38. Partant de 2,21 moles d'isodécanal, on ne recueille que 21 grammes d'eau, c'est-à-dire 1,16 moles. On obtient alors une résine brune molle avec un rendement de 65% . Dans le distillat (241 g), on a 61 % d'isodécanal, soit 0,94 moles. On constate que lorsqu'on utilise un ortho-alkylphénol, le rendement est très faible, et qu'une grande partie de l'aldéhyde n'a pas réagi. Le rapport molaire final de la résine est proche de 0,65; la courbe de répartition moléculaire est la suivante.

| N° de pic | Masse moléculaire | surface d'intégration (%) |
|---|---|---|
| 1 | 50 | 0,9 |
| 2 | 100 | 1,2 |
| 3 | 175 | 7,3 |
| 4 | 210 | 17,8 |
| 5 | 398 | 28,7 |
| 6 | 506 | 43,6 |

| | |
|---|---|
| Masse moléculaire moyenne en nombre | 309 |
| Masse moléculaire moyenne en poids | 450 |
| Indice de polydispersité | 1,46 |

### Contre-exemple 2bis

On reprend le même procédé que dans l'exemple 2, mais on utilise du formaldéhyde à 50% . On constate qu'après avoir a introduit les deux tiers environ du formaldéhyde (rapport molaire d'environ un), tout en distillant l'eau azéotropiquement, le milieu réactionnel a subi un très fort épaississement et se refluidifie peu malgré l'introduction de 100 grammes de toluène. Si l'on continue d'introduire du formaldéhyde, on n'arrive très rapidement plus à agiter. Un échantillon du milieu montre que la résine n'a pas de point de fusion et qu'elle est insoluble. Il n'est donc pas possible d'obtenir une résine para-alkylphénol/formol avec un rapport molaire supérieur à un, même dans les conditions de synthèse bien particulières de l'invention.

### Exemple 3 (comparatif)

On reprend l'exemple 1, mais avec un rapport molaire isodécanal/para-octyphénol de 0,985. On obtient une résine un peu moins molle que dans l'exemple 1, avec un rendement de 96 % et une teneur en para-octylphénol libre de 3% . La courbe de répartition moléculaire est la suivante.

| N° de pic | Masse moléculaire | surface d'intégration (%) |
|---|---|---|
| 1 | 225 | 2,2 |
| 2 | 316 | 3,07 |
| 3 | 400 | 0,7 |
| 4 | 550 | 9,0 |
| 5 | 650 | 3,2 |
| 6 | 1300 | 81,8 |

| | |
|---|---|
| Masse moléculaire moyenne en nombre | 875 |
| Masse moléculaire moyenne en poids | 1140 |
| Indice de polydispersité | 1,3 |

### Exemple 4

On reprend l'exemple 1, mais avec un rapport molaire isodécanal/para-octylphénolde 1,97. On obtient une résine un peu plus molle que dans l'exemple 1, avec un rendement de 92 % en poids, dont le rapport molaire est de 1,73 et dont la teneur en para-octylphénol libre est de 0,1% . L'indice d'hydroxyle mesuré est de 118 (Théorie : 116). La courbe de répartition moléculaire est la suivante.

| N° de pic | Masse moléculaire | surface d'intégration (%) |
|---|---|---|
| 1 | 225 | 5,1 |
| 2 | 345 | 2,3 |
| 3 | 1010 | 92,5 |

| | |
|---|---|
| Masse moléculaire moyenne en nombre | 705 |
| Masse moléculaire moyenne en poids | 895 |
| Indice de polydispersité | 1,27 |

### Contre-exemple 4

Cet exemple montre qu'en milieu contenant de l'eau, la réaction de l'aldéhyde lourd ne se fait que selon le schéma classique. Dans un ballon tricol muni d'un séparateur Dean-Stark, d'une ampoule à brome et d'un agitateur, on introduit sous agitation 206 grammes de para-octylphénol (1 moles), 2,4 grammes d'acide paratoluènesulfonique, 256 grammes (1,97 moles, rapport molaire : 1,97) d'isodécanal (EXXON, isodécanal de synthèse oxo à partir d'une coupe heptène; titre 98,5% en isomères d'aldéhyde en C₁₀ et 20 grammes d'eau. On chauffe à reflux, et on maintient ce reflux pendant trois heures. On passe alors en distillation azéotropique en éliminant l'aldéhyde n'ayant pas réagi, mais en recyclant toute l'eau extraite. La température se maintient vers 105-115°C. Lorsqu'on ne récupère plus d'aldéhyde, on passe progressivement en concentration sous vide, en maintenant la température entre 110 et 115°C jusqu'à obtenir un vide maximum d'environ 267 millibars (200 mm de mercure). On monte ensuite la température jusqu'à 200°C en poussant le vide jusqu'à environ 67 millibars (50 mm de mercure). On obtient ainsi 293 grammes de résine. Comme on a recueilli 176 grammes de distillat contenant environ 80% d'aldéhyde n'ayant pas réagi, le rapport molaire de la résine finie n'est donc que de 0,85.

### Exemple 5

On reprend l'exemple 1, mais avec un rapport molaire isodécanal/para-octylphénolde 2,46. On 2,46. On obtient une résine un peu plus molle que dans l'exemple 1, avec un rendement de 86 % en poids et un rapport molaire de 2.

### Exemple 6

On reprend l'exemple 1, mais avec un rapport molaire isodécanal/para-octylphénolde 2,96. On obtient une résine molle brune, avec un rendement de 87 % en poids, d'un rapport molaire de 2,44. L'indice d'hydroxyle mesuré est de 108 (théorie : 89). La courbe de répartition moléculaire est la suivante.

| N° de pic | Masse moléculaire | surface d'intégration (%) |
|---|---|---|
| 1 | 245 | 13,2 |
| 2 | 365 | 3,4 |
| 3 | 1070 | 83,3 |

| | |
|---|---|
| Masse moléculaire moyenne en nombre | 635 |
| Masse moléculaire moyenne en poids | 885 |
| Indice de polydispersité | 1,35 |

On constate d'après l'exemple 1 et les exemples 3 à 6 que le rapport molaire aldéhyde/alkylphénol n'a que peu ou pas d'influence sur le rendement qui est toujours élevé, et que le rapport molaire de la résine reste très proche de celui du chargement. Le rendement massique décroît cependant légèrement lorsque le rapport molaire de chargement est supérieur à deux. On n'observe pas non plus de fortes variations de la masse moléculaire du pic principal. Celui-ci représente un pourcentage élevé (supérieur à 80%, et en général pour les rapports molaires élevés supérieurs à 90% ) de la surface totale du chromatogramme.

### Exemple 7

On reprend l'exemple 1 mais, on remplace l'isodécanal par de l'heptanal de 99,5% de pureté, et on choisit un rapport molaire de chargement aldéhyde sur para-octylphénol de 1,4. Le rendement est de 97% en poids; le rapport molaire de la résine est de 1,31, et sa teneur en para-octylphénol libre est de 1% . Le point de fusion voisin de 10°C.

### Exemple 8

Dans un ballon tricol muni d'un séparateur Dean-Stark, d'une ampoule à brome et d'un agitateur, on introduit sous agitation 824 grammes de para-octylphénol (4 moles), 8,2 grammes d'acide paratoluènesulfonique et 50 grammes de toluène. On porte à 100°C et on coule en 75 minutes 683 grammes (6 moles) d'isodécanal tout en éliminant l'eau formée par distillation azéotropique. On poursuit la distillation azéotropique pendant 1 heure, puis on coule 120 grammes d'une solution de formol à 50% (2 mole de formol), tout en éliminant l'eau formée par distillation azéotropique. On poursuit la distillation azéotropique pendant 1 heure, on concentre sous pression atmosphérique jusqu'à 200°C, on met sous vide et on maintient 30 minutes à 200°C à une pression d'environ 67 millibars (50 mm de mercure).

(Le rapport molaire (isodécanal+formaldéhyde)/sur para-octylphénol est de 2. Le rapport molaire isodécanal/formaldéhyde est de 3, soit une teneur en poids d'isodécanal de 94% par rapport au total de poids d'aldéhyde). On obtient une résine molle avec un rendement de 97,5% en poids. La courbe de répartition moléculaire est la suivante.

| N° de pic | Masse moléculaire | surface d'intégration (%) |
|---|---|---|
| 1 | 205 | 0,3 |
| 2 | 275 | 3,4 |
| 3 | 475 | 2,4 |
| 4 | 1300 | 92,9 |

| | |
|---|---|
| Masse moléculaire moyenne en nombre | 1000 |
| Masse moléculaire moyenne en poids | 1270 |
| Indice de polydispersité | 1,27 |

### Exemple 9

On opère comme dans l'exemple 8, mais on utilise de l'isooctanal au lieu d'isodécanal. On obtient une résine solide noire dont le point de fusion bille et anneau est de 69°C. Le rendement est de 92% en poids. La répartition moléculaire est la suivante:

| N° de pic | Masse moléculaire | surface d'intégration (%) |
|---|---|---|
| 1 | 260 | 3,6 |
| 2 | 450 | 1,8 |
| 3 | 480 | 1,2 |
| 4 | 1895 | 93,3 |

| | |
|---|---|
| Masse moléculaire moyenne en nombre | 1265 |
| Masse moléculaire moyenne en poids | 3290 |
| Indice de polydispersité | 1,81 |

### Exemple 10

Dans un ballon tricol muni d'un séparateur Dean-Stark, d'une ampoule à brome et d'un agitateur, on introduit sous agitation 62 grammes d'isodécanal, 114 grammes de bisphénol-A et 1,2 gramme d'acide paratoluènesulfonique. On chauffe en éliminant l'eau formée par distillation . Dès obtention du reflux (température : environ 135°C), on coule en 15 minutes 250 grammes d'isodécanal (le rapport molaire isodécanal / bisphénol-A est de : 3,94), tout en poursuivant la distillation. La température monte rapidement à 170-180°C. En fin de coulée, on a récupéré une mode d'eau. On poursuit la distillation, pendant laquelle la température dans le ballon monte jusqu'à 215°C. On recueille encore 7,5 grammes d'eau. On passe alors en concentration sous vide progressif, sans laisser la température descendre en dessous de 170°C. Lorsqu'on atteint un vide d'environ 67 millibars (50 mm de mercure) et une température de 215 °C, on coupe le vide, on refroidit et on récupère 356 grammes d'une résine dont le point de fusion bille-anneau est de 65°C. Le rendement est de 90% . Le rapport molaire de la résine finie est de 3,4. Avec un rapport molaire aussi élevé, dans les conditions de la synthèse et avec le bisphénol-A dont la fonctionnalité est de 4, on pouvait s'attendre, compte tenu de ce qu'enseigne l'art antérieur, à ce qu'une gélification de la résine survienne en cours d'opération. On constate ici qu'elle ne se produit pas.

En revanche, si on travaille en présence de toluène comme dans l'exemple N°1, la température du ballon pendant la coulée de l'aldéhyde et la distillation azéotropique reste limitée à 115-125°C, on ne peut obtenir de résines non gélifiées que pour des rapports molaires inférieurs ou égaux à deux. Ceci s'accorde avec la tentative d'explication exposée plus haut selon laquelle une réaction anormale des aldéhydes lourds serait favorisée vis à vis de la formation de ponts méthylènes substitués lorsque la température est élevée.

### Exemple 11 (Comparatif)

On opère comme dans l'exemple 1, mais on utilise le paracrésol comme alkylphénol et l'acétaldéhyde comme aldéhyde. On a imposé les valeurs de 1,5, 2 et 3 pour le rapport molaire aldéhyde/alkylphénol. On obtient les résultats suivants.

| | | | |
|---|---|---|---|
| Rapport molaire | 1,5 | 2 | 3 |
| Rendement en poids (%) | 90,5 | 90,9 | 86,5 |
| rapport molaire final | 0,92 | 1,35 | 1,86 |

On constate d'après l'exemple 11 qu'avec un aldéhyde à faible nombre de carbones, on peut obtenir des résines ayant un rapport molaire final supérieur à un, mais avec des rendements plus faibles qu'avec des aldéhydes dont le nombre de carbones est supérieur à six.

## Revendications

1. Résines novolaques résultant de la condensation en présence de catalyseurs acides et en milieu pratiquement anhydre d'aldéhydes aliphatiques et uniquement de phénols parasubstitués dont les sites ortho sont libres, caractérisées en ce qu'elles comportent des restes d'aldéhydes à nombre de carbones égal ou supérieur à six et que le rapport molaire des restes d'aldéhydes aliphatiques à nombre de carbones supérieur ou égal à 6 aux restes de structures phénoliques parasubstituées est au moins égal à 1,3, et préférentiellement compris dans l'intervalle 1,3 à 5.

2. Résines novolaques selon la revendication 1, caractérisées en ce qu'elles comportent en outre des restes d'aldéhyde formique.

3. Résines novolaques selon les revendications 1 à 2, caractérisées en ce que les aldéhydes aliphatiques sont pris dans le groupe comprenant l'heptanal et les aldéhydes de synthèse oxo comportant de 8 à 10 atomes de carbone.

4. Résines novolaques selon les revendications 1 à 3, caractérisées en ce que les phénols parasubstitués sont pris dans le groupe comprenant le paracrésol, le paratertiobutylphénol, le para-octylphénol, et le bisphénol-A.

5. Procédé pour l'obtention de résines novolaques par condensation en présence de catalyseurs acides d'aldéhydes aliphatiques avec des phénols parasubstitués dont les sites ortho sont libres, caractérisées en ce que l'on opère en milieu pratiquement anhydre, que les réactifs aldéhydiques comprennent des aldéhydes à nombre de carbone égal ou supérieur à 6 et que le rapport molaire des restes d'aldéhydes aliphatiques aux restes de structures phénoliques parasubstitués est compris entre 1,3 et 5.

6. Procédé pour l'obtention de résines novolaques selon la revendication 5, caractérisé en ce que les réactifs aldéhydiques comportent en outre du formol.

7. Procédé pour l'obtention de résines novolaques selon les revendications 5 et 6, caractérisé en ce que les phénols parasubstitués sont pris dans le groupe comprenant le paracrésol, le paratertiobutylphénol, le para-octyphénol, et le bisphénol-A.

8. Procédé pour l'obtention de résines novolaques selon les revendications 6 et 7, caractérisé en ce que les aldéhydes aliphatiques sont pris dans le groupe comprenant l'heptanal et les aldéhydes de synthèse oxo comportant de 8 à 10 atomes de carbone.

## Claims

1. Novolak resins resulting from the condensation, in the presence of acid catalysts and in virtually anhydrous medium, of aliphatic aldehydes and only of para-substituted phenols in which the ortho sites are free, characterized in that they comprise aldehyde residues containing a number of carbons equal to or greater than six and in that the molar ratio of the aliphatic aldehyde residues containing a number of carbons greater than or equal to 6 to the residues containing para-substituted phenol structures is at least equal to 1.3, and preferentially within the range 1.3 to 5.

2. Novolak resins according to Claim 1, characterized in that they additionally comprise formaldehyde residues.

3. Novolak resins according to Claims 1 and 2, characterized in that the aliphatic aldehydes are taken from the group comprising heptanal and aldehydes from the Oxo process containing from 8 to 10 carbon atoms.

4. Novolak resins according to Claims 1 to 3, characterized in that the parasubstituted phenols are taken from the group comprising para-cresol, para-tert-butylphenol, para-octylphenol and bisphenol A.

5. Process for the production of novolak resins by condensation, in the presence of acid catalysts, of aliphatic aldehydes with para-substituted phenols in which the ortho sites are free, characterized in that the reaction is carried out in virtually anhydrous medium, in that the aldehyde reactants comprise aldehydes containing a number of carbons equal to or greater than 6 and in that the molar ratio of the aliphatic aldehyde residues to the residues containing para-substituted phenol structures is between 1.3 and 5.

6. Process for the production of novolak resins according to Claim 5, characterized in that the aldehyde reactants additionally comprise formaldehyde.

7. Process for the production of novolak resins according to Claims 5 and 6, characterized in that the para-substituted phenols are taken from the group comprising para-cresol, para-tert-butylphenol, para-octylphenol and bisphenol A.

8. Process for the production of novolak resins according to Claims 6 and 7, characterized in that the aliphatic aldehydes are taken from the group comprising heptanal and aldehydes from the Oxo process containing from 8 to 10 carbon atoms.

## Patentansprüche

1. Novolak-Harze, die aus der Kondensation in Gegenwart von Säurekatalysatoren und in praktisch wasserfreiem Milieu von aliphatischen Aldehyden nur mit para-substituierten Phenolen, deren ortho-Position frei ist, stammen, dadurch gekennzeichnet, daß sie Aldehydreste mit mindestens sechs Kohlenstoffatomen enthalten und daß das Molverhältnis von den aliphatischen Aldehydresten mit mindestens 6 Kohlenstoffatomen zu den Resten mit para-substituierter Phenolstruktur mindestens 1,3 beträgt und vorzugsweise in einem Bereich von 1,3 bis 5 liegt.

2. Novolak-Harze nach Anspruch 1, dadurch gekennzeichnet, daß sie zusätzlich Formaldehyd-Reste enthalten.

3. Novolak-Harze nach einem der Ansprüche 1 bis 2, dadurch gekennzeichnet, daß die aliphatischen Aldehyde ausgewählt sind aus der Gruppe von Heptanal und den Aldehyden der Oxo-Synthese mit 8 bis 10 Kohlenstoffatomen.

4. Novolak-Harze nach einem der Ansprüche 1 bis 3, dadurch gekennzeichnet, daß die para-substituierten Phenole ausgewählt sind aus der Gruppe von para-Kresol, para-tert.-Butylphenol, para-Octylphenol und Bisphenol-A.

5. Verfahren zur Herstellung von Novolak-Harzen durch Kondensation von aliphatischen Aldehyden mit para-substituierten Phenolen, deren ortho-Position frei ist, in Gegenwart von Säurekatalysatoren, dadurch gekennzeichnet, daß man in einem praktisch wasserfreien Milieu verfährt, daß die aldehydischen Reagenzien Aldehyde mit mindestens sechs Kohlenstoffatomen enthalten und daß das Molverhältnis von den aliphatischen Aldehydresten zu den Resten mit para-substituierter Phenolstruktur zwischen 1,3 und 5 liegt.

6. Verfahren zur Herstellung von Novolak-Harzen nach Anspruch 5, dadurch gekennzeichnet, daß die aldehydischen Reagenzien zusätzlich Formaldehyd enthalten.

7. Verfahren zur Herstellung von Novolak-Harzen nach einem der Ansprüche 5 bis 6, dadurch gekennzeichnet, daß die para-substituierten Phenole ausgewählt sind aus der Gruppe von para-Kresol, para-tert.-Butylphenol, para-Octylphenol und Bisphenol-A.

8. Verfahren zur Herstellung von Novolak-Harzen nach einem der Ansprüche 6 bis 7, dadurch gekennzeichnet, daß die aliphatischen Aldehyde ausgewählt sind aus der Gruppe von Heptanal und den Aldehyden der Oxo-Synthese mit 8 bis 10 Kohlenstoffatomen.
